# EUROPEAN PATENT SPECIFICATION

(11) **EP 0 717 861 B1**
(45) Date of publication and mention of the grant of the patent: **01.12.1999**
(21) Application number: 94925534.3
(22) Date of filing: 02.09.1994
(51) Int. Cl.: G02B 6/44

(54) **OPTICAL FIBRE ORGANIZER**
FASERAUFTEILUNGSVORRICHTUNG
PLATINE D'ASSEMBLAGE DE FIBRES OPTIQUES

(30) Priority: 08.09.1993 GB 9318653
(43) Date of publication of application: 26.06.1996
(73) Proprietor: N.V. RAYCHEM S.A., 3010 Kessel-Lo (BE)
(72) Inventor: MACKEN, Luk, Jozef, B-2018 Antwerpen (BE); VAN NOTEN, Lodewijk, Cordula, Michael, B-3000 Leuven (BE); DE COSTER, Pieter, B-3210 Linden (BE)
(74) Representative: Clayton, Anthony Nicholas
(86) International application number: GB9401907
(87) International publication number: WO9507481

(56) References cited:
- EP-A- 0 593 927
- WO-A-90/12334
- WO-A-91/10927
- US-A- 4 372 511
- US-A- 4 627 686
- US-A- 4 793 682
- US-A- 4 840 449

## Description

The present invention relates to various components for use in an optical fibre network, in particular for splicing, terminating and splitting.

Optical fibres are in general very small, brittle and therefore easily damaged and as a result great care must be taken in their installation and use. In order to avoid damage and light loss, a fibre must not be bent excessively and it must not be subject to unfavourable environmental conditions. As is well know, each fibre has a so-called critical bend radius below which light will be lost from the fibre. Therefore, an optical fibre system must be so configured that none of its fibres is bent at a bend radius below this critical value. Also, fibres must not be even temporarily bent during installation below a smaller bend radius at which permanent damage will occur. These requirements put constraints on the design of components for optical fibre networks.

The components in an optical fibre system are required to organize cables and their component optical fibres at, for example, cable terminations, cable splices and fibre splitters. This involves careful fibre routing, for example to allow easy access to each of many fibre splices, and storage of spare lengths of fibre.

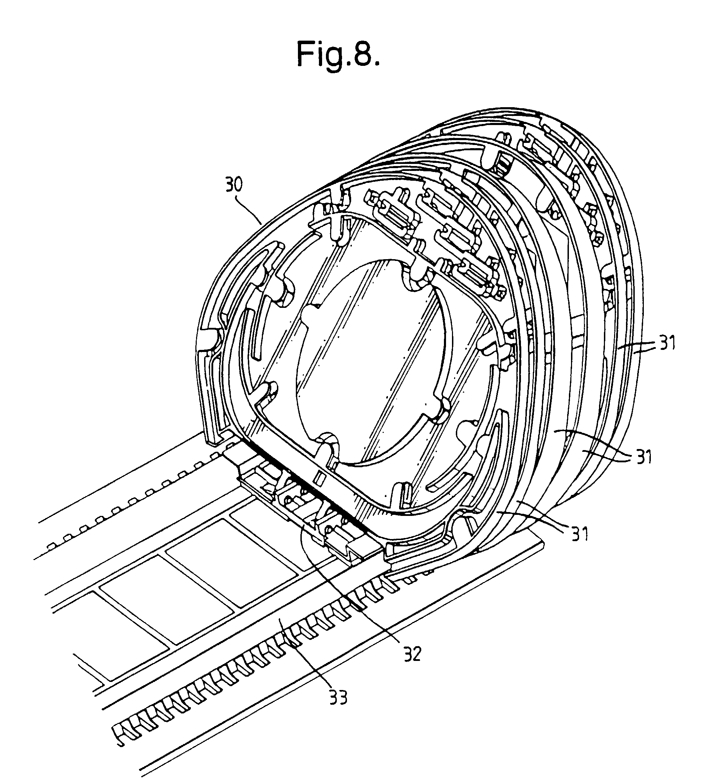

Many proposals have been made to satisfy these requirements. For example, US 4840449 (AT&T) discloses an optical fibre organizer and splicing arrangement that permits storage of variable lengths of surplus fibre. The organizer has a pair of separated cylinders extending from a first rectangular section of a base plate and a splice tray having opposite entrance sides for optical fibre in a second rectangular section. The surplus fibre is directed around one or both cylinders and underneath the splicing tray through a plurality of different length passageways so that the varying lengths of optical fibre are stored. Clockwise, counter-clockwise and figure 8 loops are used so that each optical fibre end is directed to a predetermined entrance side of the splicing tray without violating the fibre bend radius restriction.

US 4627686 (Siecor) discloses a splicing tray for optical fibres and optical fibre cables comprising three elements: a base, a number of optical fibre storage means associated with the base and an optical fibre receiving means attached to the base. Around the periphery of the base is a plurality of upstanding sidewall members, the terminal portion of which is curved inwardly towards the centre of the base.

WO91/12548 describes an optical fibre cable comprising a plurality of fibres extending in longitudinally-extending grooves around a core of the cable. A disc-shaped organizer comprising a plurality of circumferentially arranged holes is spaced from an end of the core of the optical fibre cable. A bridging means secures the organizer to the cable core, and encloses a space between the end of the core and the organizer. Fibre passes from the end of the cable core, into the said space, and then through the holes in the organizer.

We have now discovered that optical fibre organization can be markedly improved by employing a fibre break-out device at an inlet to a fibre routing and storing device or other organizer.

Thus, the invention provides an optical fibre organizer, which comprises:
(i) an outlet port;
(ii) a plurality of inlet ports; and
(iii) a fibre guide that constrains optical fibre passing between each inlet port and the outlet port to a minimum bend radius at least equal to the critical bend radius of the fibre;
each inlet port comprising an optical fibre tube break-out device which comprises:
(a) means for removably securing the device to the optical fibre organizer;
(b) a first passage for retaining a larger fibre tube; and
(c) one or more second passages for retaining a plurality of smaller fibre tubes such that fibres can pass between the larger tube and each smaller tube without significant light loss.

In this way, a group of fibres (which may constitute a cable or which may have been broken out of a cable) is broken down further, preferably to single fibre tubes before routing and storage.

The one or more second passages may comprise a single passage that is partially sub-divided by inwardly extending protrusions for individual retention of fibre tubes therein, or merely to aid location of the tubes in which case retention of one tube may require the presence of one or more others to help hold it in place. To achieve this, the one or more second passages may have a cross-section substantially that of a plurality of partially overlapping circles. Alternatively, the second passages may be mutually separate.

The fibre tubes may be retained within the break-out device by any suitable means, but we prefer that they be retained by interference fit. Each tube may be held individually by interference fit or two or more tubes may together be held by interference fit.

Each of the first passage and the one or more second passages is preferably substantially straight, and the first passage is preferably substantially coaxial with the axis of the second passage or with the axis of the group of second passages. The break-out device is secured with respect to the fibre guide by any suitable means, for example a resilient detent, or interference or other sliding fit. Such detent preferably comprises two legs at least one of which is barbed, the legs being capable of snap fitting into a slot.

Devices of the invention are preferably used in an organizer having a plurality of such slots, for example at least 8, arranged in a row along one end. In this way, a large number of incoming fibres may be secured in any of a large number of positions depending on the routing path to be followed. Further paths of the organizer may include organizer trays etc. for the purpose of splicing or splitting the fibres.

The invention is further illustrated with respect to the accompanying drawings, in which:
Figures 1 and 2 show prior art optical fibre organizers;
Figure 3 is a perspective view of an organizer of the invention;
Figures 4A to E show various other views of the organizer;
Figures 5A to E show various fibre routes through the organizer;
Figures 6A to E show an optical fibre break-out device;
Figure 7 shows a cable splice case incorporating the optical fibre organizer;
Figure 8 shows a series of organizer trays for use with the organizer.

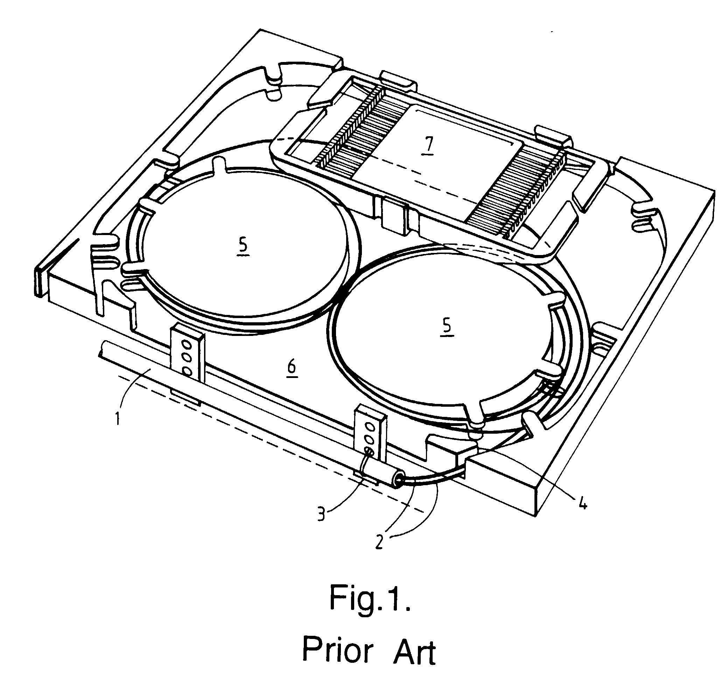

Figure 1 shows a prior art optical fibre organizer as disclosed in US 4840449 (AT&T). An optical fibre cable 1 containing optical fibres 2 is secured to an optical fibre organizer by means of a cable tying post 3. The fibres pass through an inlet port 4 and are stored around drums 5 protruding from a face 6. The optical fibres pass under a splicing tray 7 where a splice between them is secured. It may be noted that there is no means for individually organizing a plurality of incoming cables or fibres, there is no way of dealing with dark fibre, and only cables entering in the plane of the face 6 can be dealt with.

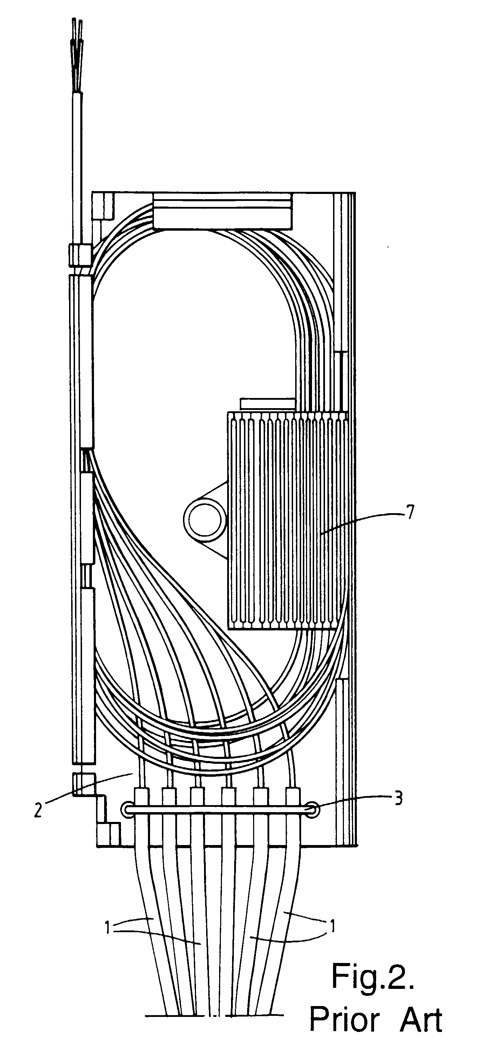

A prior art optical fibre organizer disclosed in US 4627686 (Siecor) is shown in figure 2. Here incoming cables 1 are arranged side-by-side and the fibres 2 they contain are simply routed around the base of the organizer and are retained by its side walls. The cables are held in place by a clamp 3. A fibre receiving means 7 comprises a series of slots which can retain fibre splices for connection to the outgoing cable shown at the top left of the figure. Although this design allows several incoming cables 1 to be terminated the design allows little flexibility in routing or storage.

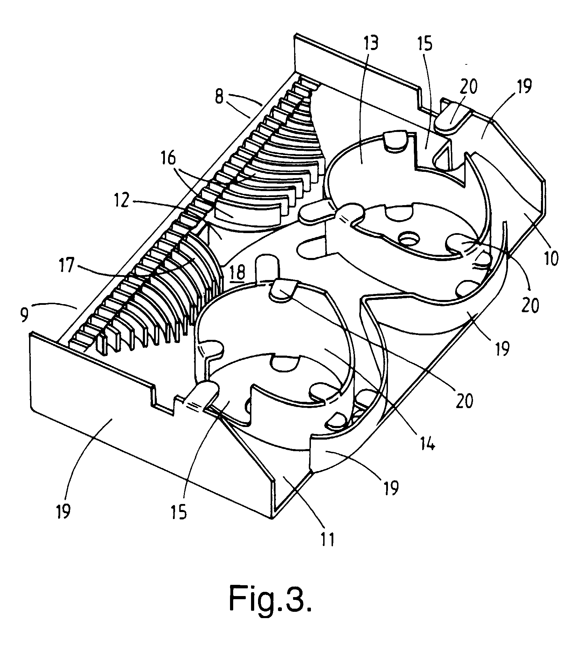

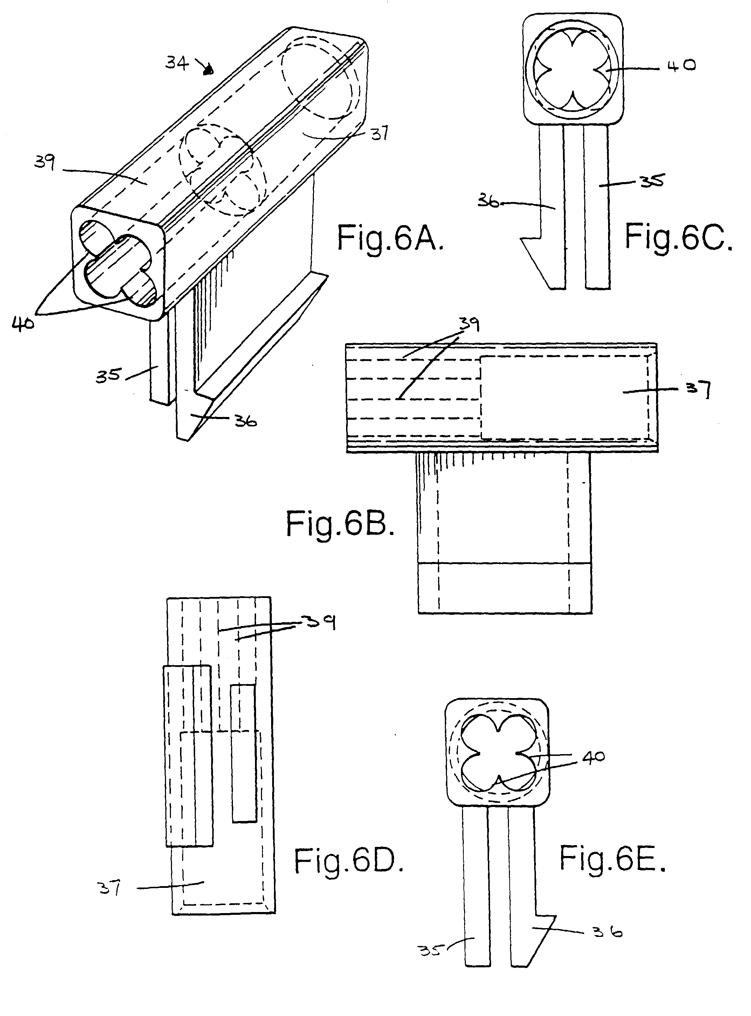

Figure 3 shows an optical fibre organizer having a first face partially bound by first (top-left as drawn) and second (lower right as drawn) opposite edge portions, a first face:
(1) bearing a plurality of inlet ports 8, 9 arranged along the first edge portion;
(2) bearing an outlet port 10, 11 at each side of the second edge portion;
(3) bearing two organizer drums 13, 14 positioned between the first and second edge portions; and
(4) having a through port 12 that extends through it to an opposite face of the organizer;
the inlet ports 8, 9 comprising a row of slots for receipt of fibre tube terminating devices (preferably the fibre break-out devices of figures 6A to E) and a series of curved walls 16, 17 for constraining fibres leaving said tubes to a minimum bend radius equal to at least the critical bend radius of the fibre.

(These slots may conveniently be referred to as ports since their function is to locate incoming fibres; it should be noted however that the fibres do not pass through the slots.)

The drums 14, 15 are preferably such that a fibre passing between any of the walls 16, 17 and the outlet ports 10, 11 is constrained by an outer surface of one or both drums 13, 14 to a minimum bend radius at least equal to the critical bend radius of the fibre, the drums 13, 14 preferably being hollow allowing a free end of fibre to pass from one of the ports, generally one of the inlet ports 8, 9, to the interior of the drums. The fibres will be stored in the drums at a minimum bend radius greater than that at which they suffer permanent damage. This minimum bend radius may be larger than the critical bend radius of the fibre since it is permanent damage rather than light loss that is of concern in the case of the dark fibre.

The through port 12 extends from a convex portion 18 of the face of the organizer at an angle to its radius vector at that portion (i.e. not radially and preferably close to tangentially) such that a fibre extending through the port 12 and over convex surface 18 is constrained to a minimum bend radius at least equal to its critical bend radius.

The organizer preferably has side walls or other retaining means 19 and the drums preferably have hooks or other retaining means 20 that help guide the fibres.

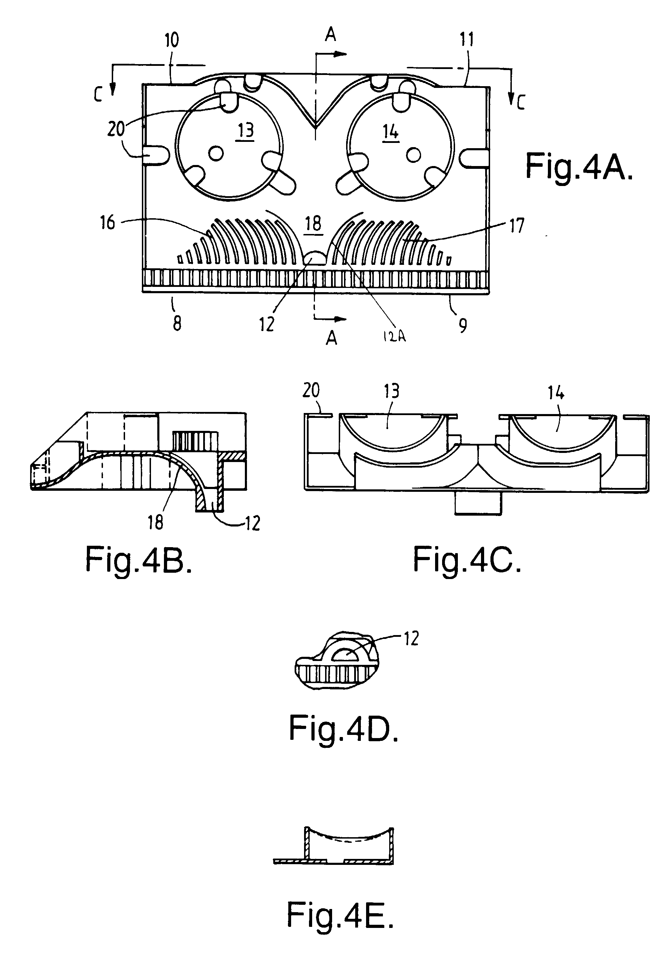

Further views of the organizer can be seen in figures 4A to 4E. In figure 4A for example it can be seen that walls 12A of the through port 12 curve along a path towards the drums 13, 14. This curvature may result from a progressive broadening of the cross-sectional size of the through port 12 towards the face illustrated in figure 4A. As a result, the through port 12 includes a substantially straight passage from one face to the opposite face allowing easy insertion of optical fibres. This can be seen best, perhaps, in figure 4B. It can be seen therefore that a fibre passing through the through hole 12 towards the drums 13, 14 is constrained to a given minimum bend radius.

The drums 13, 14 can be seen, particularly from figure 3, to be hollow thus allowing a free end of fibre to pass from one of the ports to the interior of the drums where it can be stored. The hollow drums have slots 15 in their walls through which such fibre can pass.

The inlet ports 8, 9 can be seen to have bend control means in the form of substantially mutually concentric curved walls 16, 17. The organizer shown has reflective symmetry about line AA and as a result the bend control means are arranged in two groups 16, 17, where the walls curve in opposite directions.

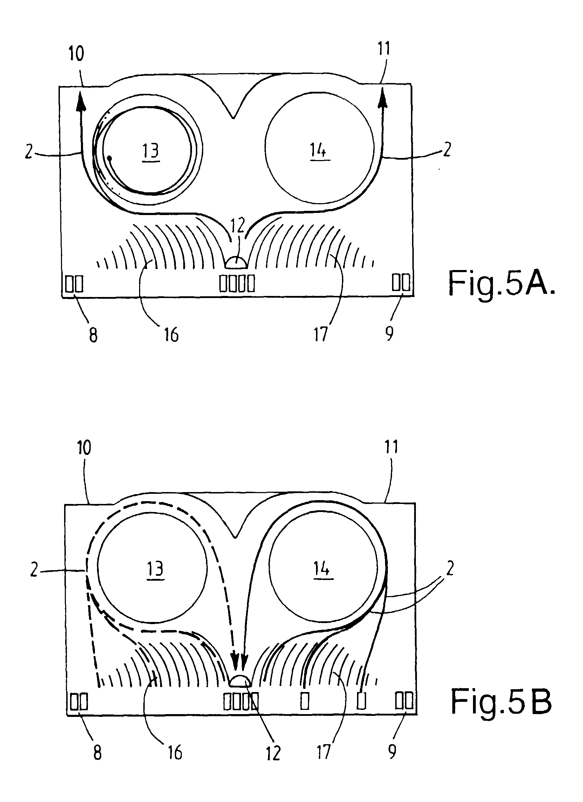

Figures 5A to E show the flexibility of the organizer in accommodating various configurations and lengths of fibre. In figure 5A fibre enters the organizer from through hole 12 and leaves through outlets 10 and 11. Also, some dark fibre leaves through hole 12 and is stored in drum 13. The organizer here is intended to be used with other components such as optical fibre splice trays accommodating fibre splices and/or fibre splitters. The organizer will be aligned with a base plate carrying such trays, on the right-hand side of which there may be a channel for accommodating fibres entering the splice trays, and on the left-hand side of which there may be a channel accommodating fibres leaving the splice trays. These passages may be referred to arbitrarily as an in trench and an out trench, although this is not intended to imply any direction of light travel.

In figure 5B fibres enter through inlet ports 8 (only a few of which are shown), pass through bend control means 16 and leave the organizer via through hole 12. Also, fibres enter through inlet ports 9, pass through bend control means 17 and exit again via through hole 12.

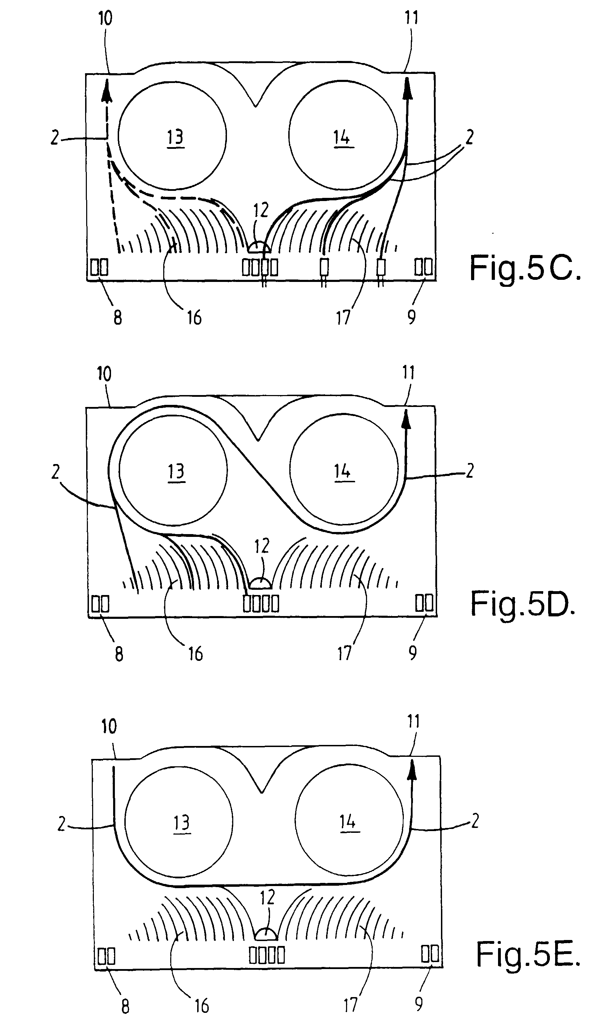

In figure 5C fibres enter through inlet ports 8 and leave through outlet port 10, and enter through inlet ports 9 and leave through outlet port 11.

In figure 5D fibres enter through inlet ports 8 and leave through outlet port 11.

In figure 5E fibres enter through outlet port 10 and leave through outlet port 11.

An optical fibre break-out 34 is shown in figures 6A to E. It may be removably secured into, for example, the slots comprising the inlet ports 8, 9 of the organizer of figure 3. This can be done by means of a resilient detent comprising for example the two legs 35, 36 illustrated, one of which, 36, is barbed to engage a lower surface of the wall defining the slot. The break-out device can be seen to have a first passage 37 for retaining a larger fibre tube (shown dotted at the upper right-hand side) and four second passages 39 (at the lower left hand end as drawn) for retaining a plurality of smaller fibre tubes. Fibres in such tubes can be seen to be able to pass between the larger tube and each smaller tube without bending that would cause significant light loss. In the embodiment illustrated the four second passages 39 comprise a single passage partially sub-divided by inwardly extending protrusions 40 for retention of the tubes therein. The precise shape of such protrusions is not critical, but in a preferred embodiment the protrusions result from the second passages having a cross-section substantially that of a plurality of partially overlapping circles In this way, the tubes are retained by interference fit. Although four second passages are shown, other numbers for example from 2-6 may be provided.

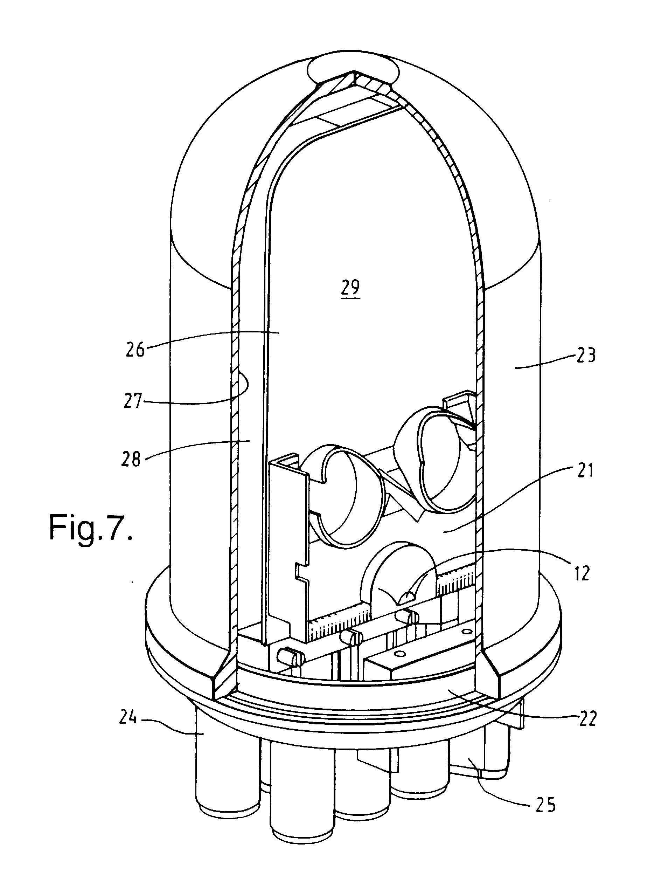

Figure 7 shows an organizer 21 as described above sealed within a splice closure, shown in cut-away to expose the organizer 21. The splice closure comprises a base 22 and a dome-shaped cover 23. The base 22 carries various circular ports 24 and oval port 25. Attached to the base is a frame or other support 26 to which the organizer 21 is attached. A second support or frame 27 is provided separated from frame or support 26 by a gap 28. This gap 28 may contain loops of fibre from incoming and outgoing cables that are not spliced within the enclosure and therefore by-pass organizer 21. A second organizer 21 may be provided on the back of the frame or support 27, and therefore out of view. The two organizers may then be in communication via their through holes 12. Organizer trays may be provided in space 29 carrying fibre splices and/or fibre splitters. Thus, cables entering the port 25 may be split such that some of the fibres they contain enter the organizer 21 as illustrated in figures 5A to 5E, and may leave organizer 21 to splice trays positioned in space 29. There, the fibres will be spliced or split and the fibres to which they are spliced or into which they are split may re-enter the organizer 21 and finally leave it, again as shown in figures 5A to 5E. Other fibres from the incoming cable may be looped in space 28 and then exit through the port. In general this will be done by taking a loop of cable of approximately two metres length which loop is inserted into oval port 25. Some of the fibres constituting that loop will simply be stored in space 28, and others will be cut and fed to the organizer 21. That loop of cable may form part of a ring or spur in a fibre optic network. The fibres leaving circular ports 24 after being spliced to the cut fibres of that loop may pass to subscribers or may be used to form a further spur.

Figure 8 illustrates optical fibre trays that may be positioned in space 29 or otherwise used in conjunction with organizer 21.

The module 30 illustrated in figure 8, which may be preinstalled with fibres, comprises a series of trays 31 hinged to a mounting device 32 which is in turn fixed to a base 33. The trays 31 can be seen to have means for storing loops of fibres and for securing fibre splices or fibre splitters. This module may be snap-fitted or otherwise attached at space 29 of figure 7 and the fibres it contains then spliced to those leaving the organizer 21.

For the avoidance of doubt it is noted that the invention provides various components, assemblies, systems and methods for organizing, storing and protecting optical fibres. Any of the various components disclosed and claimed may be used with any one or more other such components.

## Claims

1. An optical fibre organizer which comprises:
(i) an outlet port (10, 11);
(ii) a plurality of inlet ports (8, 9); and
(iii) a fibre guide (14, 15) that constrains optical fibre passing between each inlet port and the outlet port to a minimum bend radius at least equal to the critical bend radius of the fibre;
characterised by
each inlet port comprising an optical fibre tube break-out device (34) which comprises:
(a) means (36) for removably securing the device to the optical fibre organizer;
(b) a first passage (37) for retaining a larger fibre tube; and
(c) one or more second passage (39) for retaining a plurality of smaller fibre tubes such that fibres can pass between the larger tube and each smaller tube without significant light loss.

2. An organizer according to claim 1, in which the one or more second passages (39) comprise(s) a single passage partially sub-divided by inwardly extending protrusions (40) for individual retention or to aid location of tubes therein.

3. An organizer according to claim 2, in which there are two or more said second passages (39), which together have a cross-section substantially of a plurality of partially overlapping circles.

4. An organizer according to any preceding claim, in which the tubes are retained by interference fit.

5. An organizer according to any preceding claim, in which there are two or more said second passages (39), each of which is shaped for individual retention of from 2 to 6 tubes.

6. An organizer according to any preceding claim, in which each of the first passage (37) and the one or more second passages (39) is substantially straight, and the first passage is substantially coaxial with the axis of the second passage or with the axis of the group of second passages.

7. An organizer according to any preceding claim, in which the means for removably securing the device to the organizer comprises a resilient detent (35, 36).

8. An organizer according to claim 7, in which the resilient detent comprises two legs (35, 36), at least one of which (36) is barbed, the legs being capable of fitting into a hole in the organizer.

9. An organizer according to any preceding claim, in which the fibre guide comprises an organizer drum (13, 14) positioned with respect to the ports such that a fibre passing between the outlet port (10, 11) and any of the inlet ports (8, 9) is constrained by an outer surface of the drum to said minimum bend radius.

10. An organizer according to any preceding claim, which additionally comprises one or more organizer trays (31) fed by fibres from the inlet or outlet ports.

11. An organizer according to any preceding claim, which has a through port (12) that extends through a face of the organizer, which face carries the inlet ports (8, 9), the outlet port (10, 11) and the fibre guide (14, 15), to an opposite face of the organizer.

12. An organizer according to any preceding claim, in which the fibre guide (14, 15) comprises an organizer drum that is hollow allowing a free end of fibre to pass from the inlet ports (8, 9) or the outlet port (10, 11) to the interior of the drum and to be stored therein at a minimum bend radius greater than that at which it suffers permanent damage.

13. An organizer according to any preceding claim, in which each inlet port (8, 9) has bend control means (16, 17) adjacent thereto, to direct a fibre passing through that port towards the fibre guide.

## Patentansprüche

1. Lichtleiterorganisator, der folgendes aufweist:
(i) eine Auslaßöffnung (10, 11);
(ii) eine Vielzahl von Einlaßöffnungen (8, 9); und
(iii) eine Lichtleiterführung (14, 15), die einen Lichtleiter, der zwischen jeder Einlaßöffnung und der Auslaßöffnung verläuft, zu einem kleinsten Krümmungsradius zwingt, der wenigstens gleich dem kritischen Krümmungsradius des Lichtleiters ist;
dadurch gekennzeichnet,
daß jede Einlaßöffnung eine Lichtleiterrohr-Abzweigvorrichtung (34) aufweist, die folgendes aufweist:
(a) eine Einrichtung (36) zum abnehmbaren Befestigen der Vorrichtung an dem Lichtleiterorganisator;
(b) eine erste Passage (37) zum Festlegen eines größeren Lichtleiterrohrs; und
(c) eine oder mehrere zweite Passagen (39) zum Festlegen einer Vielzahl kleinerer Lichtleiterrohre derart, daß Lichtleiter zwischen dem größeren Rohr und jedem kleineren Rohr ohne signifikante Lichtverluste verlaufen können.

2. Organisator nach Anspruch 1,
wobei die eine oder die mehreren zweiten Passagen (39) eine einzige Passage aufweisen, die teilweise von sich nach innen erstreckenden Vorsprüngen (40) unterteilt ist, um Rohre darin einzeln festzulegen oder die Positionierung von Rohren darin zu unterstützen.

3. Organisator nach Anspruch 2,
wobei zwei oder mehr der zweiten Passagen (39) vorgesehen sind, die zusammen einen Querschnitt von im wesentlichen einer Vielzahl von einander teilweise überlappten Kreisen haben.

4. Organisator nach einem der vorhergehenden Ansprüche, wobei die Rohre durch Festsitz festgelegt sind.

5. Organisator nach einem der vorhergehenden Ansprüche, wobei zwei oder mehr der zweiten Passagen (39) vorgesehen sind, von denen jeder zum einzelnen Festlegen von zwei bis sechs Rohren geformt ist.

6. Organisator nach einem der vorhergehenden Ansprüche, wobei jede von der ersten Passage (37) und der einen oder mehreren zweiten Passagen (39) im wesentlichen gerade ist und wobei die erste Passage mit der Achse der zweiten Passage oder mit der Achse der Gruppe von zweiten Passagen im wesentlichen koaxial ist.

7. Organisator nach einem der vorhergehenden Ansprüche, wobei die Einrichtung zum abnehmbaren Befestigen der Vorrichtung an dem Organisator eine elastische Arretierung (35, 36) aufweist.

8. Organisator nach Anspruch 7,
wobei die elastische Arretierung zwei Schenkel (35, 36) aufweist, von denen wenigstens einer (36) mit Widerhaken versehen ist, wobei die Schenkel imstande sind, in ein Loch in dem Organisator hineinzupassen.

9. Organisator nach einem der vorhergehenden Ansprüche, wobei die Lichtleiterführung eine Organisatortrommel (13, 14) aufweist, die in bezug auf die Öffnungen derart positioniert ist, daß ein Lichtleiter, der zwischen der Auslaßöffnung (10, 11) und einer der Einlaßöffnungen (8, 9) verläuft, von einer äußeren Oberfläche der Trommel auf den minimalen Krümmungsradius gezwungen wird.

10. Organisator nach einem der vorhergehenden Ansprüche, der zusätzlich eine oder mehrere Organisatorwannen (31) aufweist, denen Lichtleiter von den Einlaß- oder Auslaßöffnungen zugeführt werden.

11. Organisator nach einem der vorhergehenden Ansprüche, der eine Durchgangsöffnung (12) hat, die sich durch eine Fläche des Organisators, die die Einlaßöffnungen (8, 9), die Auslaßöffnung (10, 11) und die Lichtleiterführung (14, 15) trägt, zu einer gegenüberliegenden Fläche des Organisators erstreckt.

12. Organisator nach einem der vorhergehenden Ansprüche, wobei die Lichtleiterführung (14, 15) eine Organisatortrommel aufweist, die hohl ist und es ermöglicht, daß ein freies Ende eines Lichtleiters von den Einlaßöffnungen (8, 9) oder der Auslaßöffnung (10, 11) in das Innere der Trommel verläuft und darin mit einem minimalen Krümmungsradius aufgenommen wird, der größer als derjenige ist, bei dem sie permanent beschädigt wird.

13. Organisator nach einem der vorhergehenden Ansprüche, wobei jede Einlaßöffnung (8, 9) angrenzend daran Krümmungssteuerungseinrichtungen (16, 17) hat, um einen Lichtleiter, der durch die Öffnung verläuft, zu der Lichtleiterführung hin zu leiten.

## Revendications

1. Organiseur pour fibres optiques qui comporte :
(i) un accès de sortie (10, 11) ;
(ii) plusieurs accès d'entrée (8, 9) ; et
(iii) un guide (14, 15) de fibre qui contraint une fibre optique passant entre chaque accès d'entrée et l'accès de sortie à un rayon minimal de courbure au moins égal au rayon critique de courbure de la fibre ;
caractérisé par le fait que
chaque accès d'entrée comporte un dispositif (34) d'éclatement à tubes à fibres optiques qui comporte :
(a) un moyen (36) pour la fixation amovible du dispositif à l'organiseur pour fibres optiques ;
(b) un premier passage (37) destiné à retenir un tube à fibres plus grand ; et
(c) un ou plusieurs seconds passages (39) destinés à retenir plusieurs tubes à fibres plus petits de manière que des fibres puissent passer entre le tube plus grand et chaque tube plus petit sans perte notable de lumière.

2. Organiseur selon la revendication 1, dans lequel le ou les seconds passages (39) comporte (ou comportent) un passage unique partiellement subdivisé par des saillies (40) s'étendant vers l'intérieur pour une retenue individuelle ou pour aider au positionnement de tubes dans celui-ci.

3. Organiseur selon la revendication 2, dans lequel il y a deux ou plus de deux desdits seconds passages (39) qui, ensemble, ont une section transversale formée sensiblement de plusieurs cercles se chevauchant partiellement.

4. Organiseur selon l'une quelconque des revendications précédentes, dans lequel les tubes sont retenus par ajustement serré.

5. Organiseur selon l'une quelconque des revendications précédentes, dans lequel il y a deux ou plus de deux desdits seconds passages (39) dont chacun est configuré pour une retenue individuelle de deux à six tubes.

6. Organiseur selon l'une quelconque des revendications précédentes, dans lequel chacun du premier passage (37) et du ou des seconds passages (39) est sensiblement droit, et le premier passage est sensiblement coaxial avec l'axe du second passage ou avec l'axe du groupe de seconds passages.

7. Organiseur selon l'une quelconque des revendications précédentes, dans lequel le moyen pour la fixation amovible du dispositif à l'organiseur comporte un organe d'arrêt élastique (35, 36).

8. Organiseur selon la revendication 7, dans lequel l'organe d'arrêt élastique comporte deux pattes (35, 36) dont au moins l'une (36) est barbelée, les pattes étant capables de s'ajuster dans un trou de l'organiseur.

9. Organiseur selon l'une quelconque des revendications précédentes, dans lequel le guide de fibre comporte un tambour (13, 14) d'organiseur positionné par rapport aux accès de manière qu'une fibre passant entre l'accès de sortie (10, 11) et l'un quelconque des accès d'entrée (8, 9) soit contrainte par une surface extérieure du tambour audit rayon minimal de courbure.

10. Organiseur selon l'une quelconque des revendications précédentes, qui comporte en outre un ou plusieurs plateaux (31) d'organiseur auxquels des fibres arrivent des accès d'entrée ou de sortie.

11. Organiseur selon l'une quelconque des revendications précédentes, qui comporte un accès traversant (12) s'étendant à travers une face de l'organiseur, laquelle face porte les accès d'entrée (8, 9), l'accès de sortie (10, 11) et le guide (14, 15) de fibre, jusqu'à une face opposée de l'organiseur.

12. Organiseur selon l'une quelconque des revendications précédentes, dans lequel le guide (14, 15) de fibre comporte un tambour d'organiseur qui est creux, permettant à une extrémité libre d'une fibre de passer des accès d'entrée (8, 9) ou de l'accès de sortie (10, 11) à l'intérieur du tambour et d'y être stockée à un rayon minimal de courbure supérieur à celui auquel elle est affectée d'une détérioration définitive.

13. Organiseur selon l'une quelconque des revendications précédentes, dans lequel chaque accès d'entrée (8, 9) comporte des moyens (16, 17) de limitation de courbure qui lui sont adjacents, pour diriger une fibre passant à travers cet accès vers le guide de fibre.
